# EUROPEAN PATENT APPLICATION

(11) **EP 2 306 154 A2**
(43) Date of publication of application: **06.04.2011**
(21) Application number: 10170697.6
(22) Date of filing: 23.07.2010
(51) Int. Cl.: G01C 21/36, G09B 29/10

(54) **Navigation device and program**

(30) Priority: 30.09.2009 JP 2009226984; 29.03.2010 JP 2010074055
(71) Applicant: AISIN AW CO., LTD., Anjo-shi, Aichi-ken 444-1192 (JP)
(72) Inventor: Ushida, Koichi, ANJO-SHI, AICHI-KEN 444-1192 (JP)
(74) Representative: Intès, Didier Gérard André

(57) **Abstract**

A navigation device include a recording unit recording map information and facility information; a display unit, that displays a map and an icon to which a function based on a position of the icon after a movement ('post-movement position'), is assigned; a facility search unit; a display control unit that displays on the display unit a map of a vicinity of a searched facility; an operation detection unit, which detects a movement of the icon by a user; and an operation control unit, that sets a predetermined area from a position of the searched facility as a lead-in area, and which, when the map of the vicinity of the searched facility is displayed on the display unit, if the icon is moved, and if the post-movement position is within the lead-in area, executes the function of the icon based on the position of the searched facility.

## Description

### 1. Field of the Invention

The present invention relates to a navigation device and a program that display an icon such as a mark together with a map. Especially, the present invention relates to a navigation device and a program, in which a specific function is executed by operating the icon on the map.

### 2. Description of the Related Art

In conventional navigation devices for vehicle, a host vehicle position is calculated in real time by using various types of sensors in a vehicle and a GPS (Global Positioning System) satellite. The calculated host vehicle position is displayed on an electronic map. Further, the navigation devices have a function to provide guidance on a route to a destination when a user has designated the destination. The navigation devices of this kind are common also as portable terminals for pedestrian, besides the terminals for vehicle.

As navigation devices of this kind, technologies of Japanese Patent Application No. JP-A-2002-323332 and Japanese Patent Application No. JP-A-2002-328028 are publicly known.
Japanese Patent Application No. JP-A-2002-323332 suggests a navigation device, in which facilities meeting conditions designated by the user are displayed on a list, a map centered on a facility selected by the user from the list is displayed, and a destination can be set on the displayed map.
Japanese Patent Application No. JP-A-2002-328028 suggests a navigation device, in which, a departure point, a destination, a waypoint, and the like can be designated in a manner such that a button object associated with specific processing is displayed together with the map, and when the button object and a coordinate on the map are designated on a touch panel, a mark is generated and displayed at a position on the map corresponding to the designated coordinate.

### SUMMARY OF THE INVENTION

In the technology of Japanese Patent Application No. JP-A-2002-323332, the destination is set on the map after the map of the vicinity of the facility searched by the user is displayed. Therefore, it is possible to set as the destination not only the facility searched by the user but also an arbitrary point in the vicinity of the searched facility. Also, it is referable to display the map of the vicinity of the selected facility because the vicinity situation can be confirmed before setting the destination.
In the technology of Japanese Patent Application No. JP-A-2002-328028, the destination and the like are displayed with icons on a display, and the destination and the like of the navigation device are set by a drag operation that the user selects and moves an icon with a finger touched on the touch panel. The user can perform a movement looking at the icon displayed on a screen, which enables an intuitive operation.

However, after displaying the map of the vicinity of the searched facility as suggested in Japanese Patent Application No. JP-A-2002-323332, when setting the searched facility as the destination by moving the icon as suggested in Japanese Patent Application No. JP-A-2002-328028, the icon can be off the accurate position of the searched facility although the user intended to move the icon to the position of the searched facility. Further, if there are many roads in the vicinity of the searched facility and the destination is set off the position due to the mis-located icon, a route to reach a different road may be searched as a guidance route for navigation.

It is an object of the present invention to provide a navigation device and a program, in which a position setting can be accurately performed when operating the icon on the map.

In the navigation device according to a first aspect of the present invention, respective functions are assigned to the respective icons displayed on a map screen, and when the user moves one of the icons, the function of the icon is executed with the position or based on the position after the movement, called hereinafter "post-movement position".
The navigation device includes: a recording unit 11 that records information data such as facility information, map information, and the like; a display unit 12 that performs displays of the information and guidance information such as the icon and the like; a central processing unit 17 that performs various processing for the navigation. When the user searches for a desired facility, a facility search unit 17a performs facility search based on search conditions, and a display control part 17b displays the map of the vicinity of the searched facility on the display unit 12. If a plurality of facilities have been acquired as a result of the facility search, the result is displayed on a list to make the user select a desired facility, and a facility selected by the user is displayed as the searched facility on the map.
On the display unit 12, the icons are displayed together with the map. When the user moves an icon, an operation detection unit 17c detects a movement direction and a movement amplitude of the icon and specifies a post-movement position of the icon. The respective functions such as destination setting, memory point setting, or the like are set to the respective icons.
When the searched facility is displayed on the map, an operation control unit 17d sets a lead-in area in the vicinity of the searched facility, in which specific behaviours can be defined : If the position of the icon after the movement that was detected by the operation detection unit 17c is within the lead-in area, the operation control unit 17d executes the function of the icon with the position of the searched facility (as if it were located at the position of the searched facility), judging that the icon was moved to the position of the searched facility. If the detected position of the icon after the movement is not within the lead-in area, the operation control unit 17d executes the function of the icon with the position of the icon after the movement.

In the navigation device according to a second aspect of the present invention, the destination for the navigation is set when the user moves a destination icon. The destination icon is to set the position, where the icon was moved, as the destination for the navigation. If the position of the destination icon after the movement is within the lead-in area, the operation control unit 17d sets the position of the searched facility as the destination, judging that the destination icon was moved to the position of the searched facility.

The navigation device according to a third aspect of the present invention includes a touch panel unit 12b to perform an input by a finger's touch. The operation detection, unit 17c detects the drag operation by the user based on the input from the touch panel unit 12b. If the position of the icon subjected to the drag operation is within the lead-in area, the operation control unit 17d executes the function of the icon with the position of the searched facility, judging that the icon was moved to the position of the searched facility.

A program according to a fourth aspect of the present invention causes a computer, which comprises a recording unit that records map information and facility information and a display unit that displays a map and an icon, to execute the steps of searching for a desired facility; displaying on the display unit a map of a vicinity of a searched facility searched in the facility search step; detecting a movement of the icon by a user; wherein a predetermined area from a position of the searched facility is set as a lead-in area, and a function based on a position of the icon after a movement of the icon, or 'post-movement position', is assigned to said icon.
The program further causes the computer to execute a step of executing, when the map of the vicinity of the searched facility is displayed on the display unit in the display step, if the icon is moved, and if the post-movement position, detected in the detection step, is within the lead-in area, the function assigned to the icon based on the position of the searched facility.

The navigation device according to the first aspect of the present invention sets the lead-in area to lead the icon in the vicinity of the searched facility searched by the user, and executes the function of the icon with the position of the searched facility searched by the user if the icon was moved to within the lead-in area.
Consequently, when the user moves the icon to the position of the searched facility, it is not necessary to move the icon to the accurate position, but it is only necessary to move the icon to the vicinity of the searched facility; therefore, the operation for selecting the searched facility becomes easy. In addition, the lead-in area is limited to the vicinity of the searched facility; therefore, the user can perform movement in a usual manner if the user desires to move the icon to another position than the searched facility.

The navigation device according to the second aspect of the present invention is to set the destination by moving the icon. Therefore, the operation becomes easy as the first aspect of the present invention.

The navigation device according to the third aspect off the present invention is to move the icon by performing the drag operation by a finger on the touch panel. Therefore, intuitive icon operation becomes possible in addition to the effects of the first aspect of the present invention.

In the program according to the fourth aspect of the present invention, the computer reads the program to set the lead-in, area to lead the icon in the vicinity of the searched facility searched by the user, and if the icon is moved in the lead-in area, executes the function of the icon with the position of the searched facility searched by the user.
Consequently, when the user moves the icon to the position of the searched facility, it is not necessary to move the icon to the accurate position, but it is only necessary to move the icon to the vicinity of the searched facility; therefore, the operation for selecting the searched facility becomes easy. In addition, the lead-in area is limited to the vicinity of the searched facility; therefore, the user can perform movement in a usual manner if the user desires to move the icon to another position than the searched facility.

### BRIEF DESCRIPTION OF THE DRAWINGS

FIG. 1 shows a block diagram showing an overall structure including a part of function expression of a navigation device according to an embodiment of the present invention.

FIG. 2 is an explanatory drawing of a facility selection screen of the navigation device according to the embodiment of the present invention.

FIG. 3 is an explanatory drawing of a map display screen of the navigation device according to the embodiment of the present invention.

FIG. 4 is an explanatory drawing of a lead-in area of the navigation device according to the embodiment of the present invention.

FIGS. 5A and 5B are explanatory drawings of a destination setting method of the navigation device according to the embodiment of the present invention.

FIGS. 6A and 6B are explanatory drawings of the destination setting method of the navigation device according to the embodiment of the present invention.

FIG. 7 is a flowchart of the navigation device according to the embodiment of the present invention.

FIG. 8 is an explanatory drawing of the destination setting method of the navigation device according to another embodiment of the present invention.

FIG 9 shows an example of a display screen for a destination that was set in the destination setting method of FIG. 8.

FIG. 10 is an explanatory drawing of a map display method of the navigation device according to another embodiment of the present invention.

FIG. 11 shows an example of the display screen that was displayed in the map display method of FIG. 10.

### DETAILED DESCRIPTION OF THE PREFERRED EMBODIMENT

The present invention is described in further detail below with reference to embodiments in conjunction with the accompanying drawings. In the embodiments, the same symbols and signs in the drawings refer to the same or corresponding function parts; therefore, overlapped explanation is omitted.

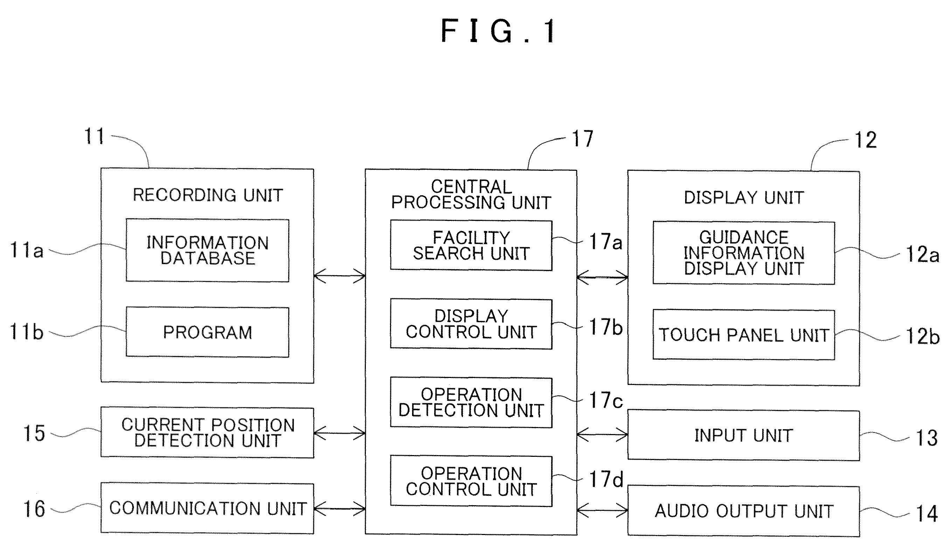

FIG. 1 is a block diagram showing a system structure of a navigation device according to the present embodiment. The navigation device, which is installed in a vehicle in case of for vehicle or carried by a user in case of for pedestrian, is provided with a recording unit 11. an display unit 12, an input unit 13, an audio output unit 14, a current position detection unit 15, a communication unit 16. and a central processing unit 17.

The recording unit 11, which is a recording medium that records information necessary for a navigation function, includes an optical disk such as a DVD, a magnetic disk such as a hard disk, a semiconductor memory such as a memory card, and the like. The recording unit 11 records data such as an information database 11a to record information, a program 11b to execute various functions of the navigation device, and the like. The information database 11a records road data representing a connection relation of roads, facility data representing a name and a position of a facility, guidance data necessary for route guidance, map data used in various types of functions for navigation, and the like. The program 11b records an operation program that performs an operation according to a manipulation of the user, a search program that performs search for the facility, a display control program that controls information to display, and the like. The information database 11a and the program 11b may be recorded in different recording media. For example, the program 11b may be included in the recording unit 11 of the navigation device, and the information database 11a may be recorded in the recording unit 11 of an external server and the information may be acquired through communication via the communication unit 16.

The display unit 12, which is a display device that outputs image information for the navigation, includes a liquid crystal display provided in the navigation device or the vehicle, and the like. The display unit 12 mainly operates as a guidance information display unit 12a that displays various kinds of guidance information. However, if the display unit 12 has a function as an input device, the display unit 12 is provided with a touch panel unit 12b that detects a touch of a finger of the user. The guidance information display unit 12a displays information necessary for various kinds of operation and guidance of the navigation device such as map information, facility information, an icon, a menu, and the like. The touch panel unit 12b detects a touch position of the finger of the user when the display unit 12 operates as the input device.

The input unit 13, which is the input device that operates the navigation device, includes a button, a mouse, a microphone for performing an audio input by the user, and the like. In addition, the touch panel unit 12b of the display unit 12 operates as the input unit 13. These members instruct various kinds of processing to the central processing unit 17 upon an input operation of the user, such as setting the destination and performing a scroll operation of a map.

The audio output unit 14, which is an audio output device that outputs audio information for navigation, includes a speaker provided in the navigation device or the vehicle, and the like. The audio output unit 14 provides the user with the navigation function, for example, by outputting route guidance such as a right/left turn at an intersection by audio.

The current position detection unit 15, which corresponds to various kinds of antennas and sensors that detect a current position of the vehicle and the navigation device, includes a GPS receiver, a beacon receiver, an absolute direction sensor, a relative direction sensor, a distance sensor, and the like. An electronic device such as a personal computer having a function to set the destination on the map and output the guidance information of a route and the like is also a kind of the navigation device. However, such device may not include the current position detection unit 15.

The communication unit 16, which, corresponds to various kinds of antennas, communication devices, and the like that transmit and receive information stored in the navigation device and the vehicle, receives road information transmitted from a broadcasting station and a beacon, and acquires information necessary for the user by performing communication with external centers.

The central processing unit 17 includes a CPU that executes various kinds of computing processing according to the program, a RAM that is used as a working memory when the CPU executes the various kinds of computing processing, and the like. The central processing unit 17 performs overall control of the navigation device.
In the present embodiment, the central processing unit 17 includes: a facility search unit 17a that searches for the facility from the information database 11a based on the conditions inputted by the user with the input unit 13; a display control unit 17b that displays the map of a vicinity of a searched facility including the facility searched by the user; an operation detection unit 17c that detects a movement volume and a movement direction of the icon when the user operates the icon displayed on the guidance information display unit 12a; an operation control unit 17d that executes a function determined based on an operation volume and the movement direction of the icon that were detected by the operation detection unit 17c.
When the user performs a movement operation of the icon displayed on the guidance information display unit 12a, the button, the mouse, or the touch panel unit 12b as the input unit 13 is used. In case of using the button, the icon is moved for example by moving a displayed cursor to over the icon with a cross key, selecting the icon by pressing the button, moving the icon with the cross key, and canceling the selection. A merit of an operation with the button is that the operation can be performed at a position far from the navigation device with use of a remote controller or the like. In case of using the mouse, the displayed icon is moved for example by a drag operation. A merit of an operation with the mouse is that the operation is easier than the operation with the button. In case of using the touch panel, the icon is moved for example by touching the displayed icon with a finger and performing the drag operation. A merit of an operation with the touch panel is that the operation can be intuitively performed.

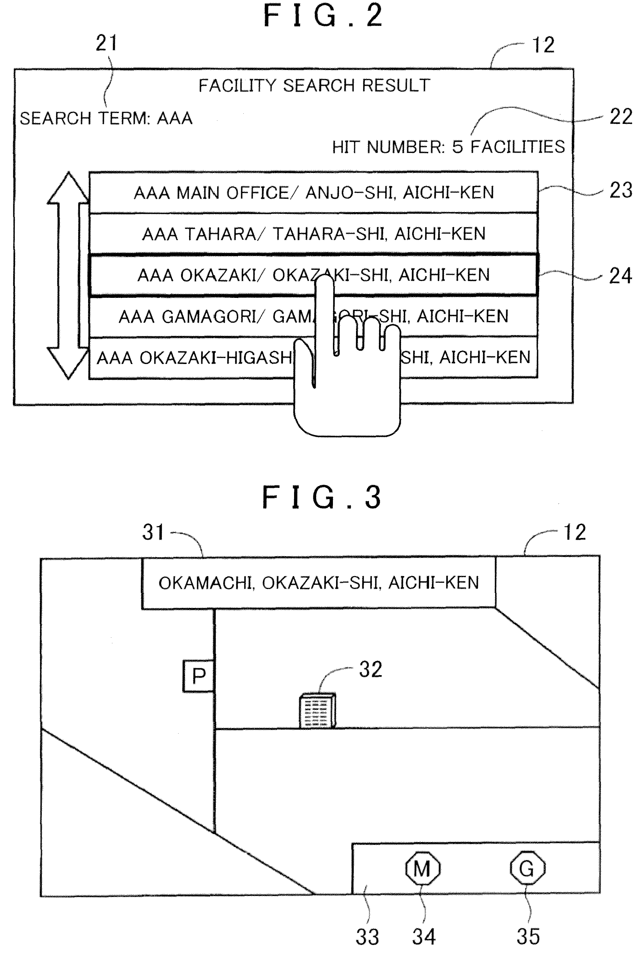

FIG. 2 shows an example of a facility selection screen of the navigation device according to the embodiment of the present invention. Hereinafter, a case in which the user sets a facility "AAA Okazaki" as the destination is described with reference to the drawing. Search functions such as an address search, a category search, a telephone number search, and the like are included as search methods of the facility. In the present embodiment, a name search by a facility name is performed. When the user inputs "AAA" as a search term, facility search processing is executed by the facility search unit 17a and a facility search result is displayed on the display unit 12. Specifically, a facility list 23 including "AAA" in names is displayed as the facility search result. In addition, information such as "AAA" that was inputted as the search term, a hit number "5 facilities" as a result of the facility search, and the like is also displayed in a search term display column 21 and a hit number display column 22 respectively.

When the user selects from the facility list 23 a search result display column 24 where "AA-A Okazaki" as the destination is displayed, the map centered on the "AAA Okazaki" as the searched facility is called by the display control unit 17b and displayed on the display unit 12. In the present embodiment, the touch panel to directly touch the display unit 12 is utilized when selecting a facility from the facility list 23. However, another input unit 13 such as the button, the remote control, or the like may be utilized in the same manner.

FIG. 3 shows a screen example that the map centered on "AAA Okazaki 32" as the searched facility is displayed on the display unit 12. The "AAA Okazaki 32" is displayed at the center of the screen of the display unit 12. In addition, an address of the vicinity of the map displayed on the screen is displayed in an address display column 31, and icons such as a memory point icon 34, a destination icon 35, and the like are displayed in a function icon column 33.

A function is assigned to each of the icons displayed in the function icon columns 33. When the user selects one of the icons and moves on the screen, the assigned function is executed with the position after the movement. For example, the function to register the position after the movement as a memory point is assigned to the memory point icon 34, and the position registered as the memory point will be easily called in the map or the like. In addition, the function to set the position after the movement as the destination is assigned to a destination icon 35, and the route to the position set as the destination is searched by the central processing unit 17.

In case of setting the "AAA Okazaki 32" as the destination using the destination icon 35, the user moves the destination icon 35 to the position of the "AAA Okazaki 32". In this operation, it is difficult to accurately move the destination icon 35 to the position of the "AAA Okazaki 32". If the position of the destination icon 32 is off the position of the "AAA Okazaki 32", the destination is set to a position that is different from the position of the "AAA Okazaki 32". In some cases, a route to a road that is not adjacent to the "AAA Okazaki 32" is searched. In order to prevent such inconvenience, in the present invention, a lead-in area to judge that the icon such as the destination icon or the like was moved to the searched facility is set in the vicinity of the searched facility.

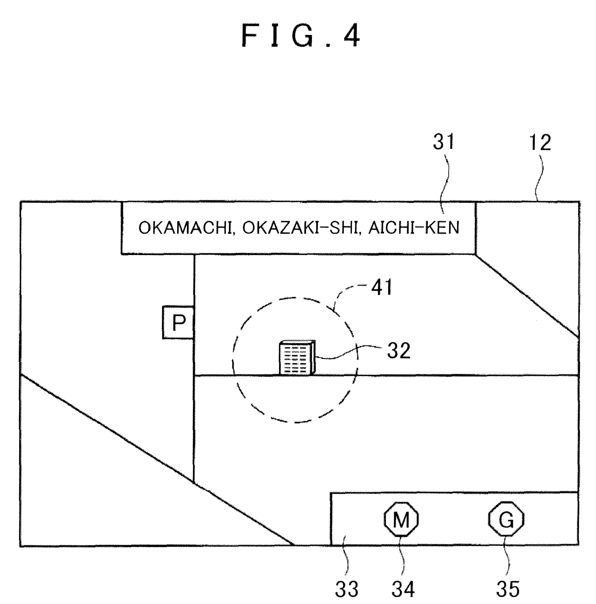

FIG. 4 shows an idea of the lead-in area. In the present embodiment, a lead-in area 41 is set in the vicinity of the "AAA Okazaki 32" as the searched facility. The lead-in area 41 is set for example to a circle with a 100-meter radius centered on the "AAA Okazaki 32".

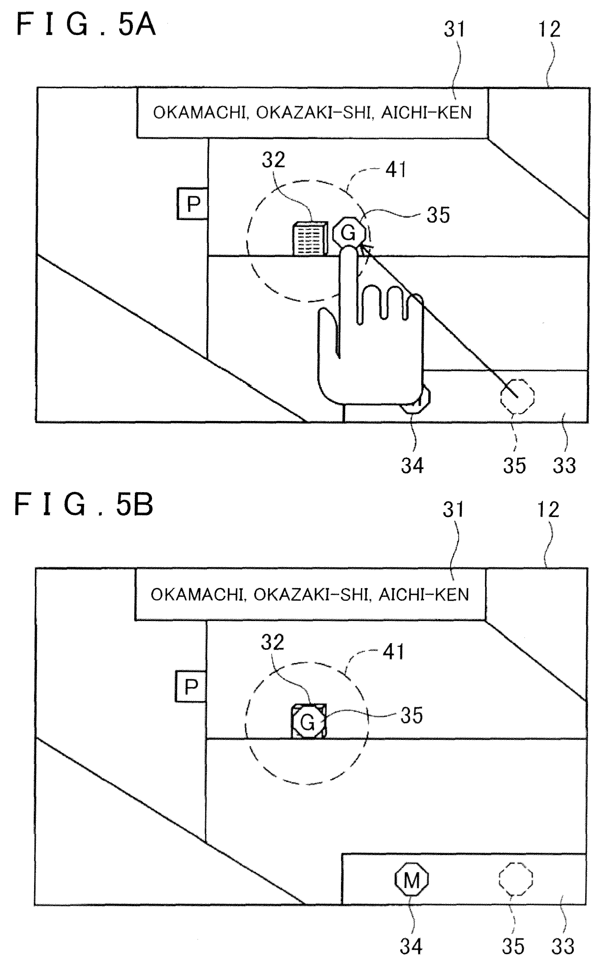

FIGS. 5A and 5B show an operation in case of moving the destination icon 35 to within the lead-in area. When the user has moved the destination icon 35, if the position after the movement is inside the lead-in area 41 as shown in FIG. 5A, the operation control unit 17d judges that the destination icon 35 was moved to the position of the "AAA Okazaki 32" and the destination icon 35 is set to the position of the "AAA Okazaki 32" as shown in FIG. 5B. In this manner, it is only necessary to move the destination icon 35 to the vicinity of the "AAA Okazaki 32" in case of desiring to set the destination to the "AAA Okazaki 32"; therefore, the operation becomes easy for the user.

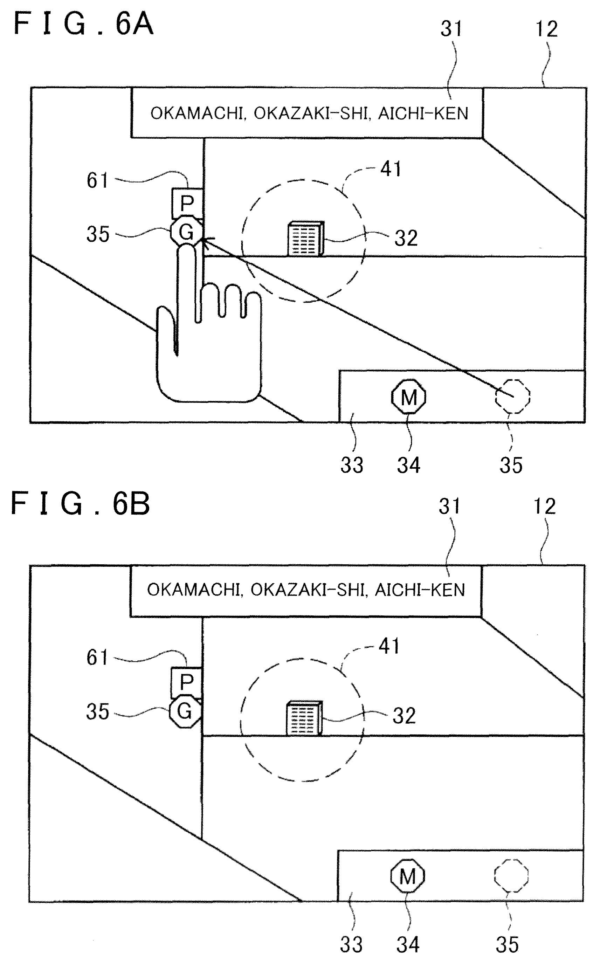

FIGS. 6A and 6B show an operation in case of moving the destination icon 35 to outside the lead-in area. When the user has moved the destination icon 35, if the position after the movement is outside the lead-in area 41 as shown in FIG. 6A, the destination icon 35 is directly set to the moved position as shown in FIG. 6B. In case of FIGS. 6A and 6B, the destination icon 35 is moved to a position of a parking lot 61: therefore, the position of the parking lot 61 is set as the destination.

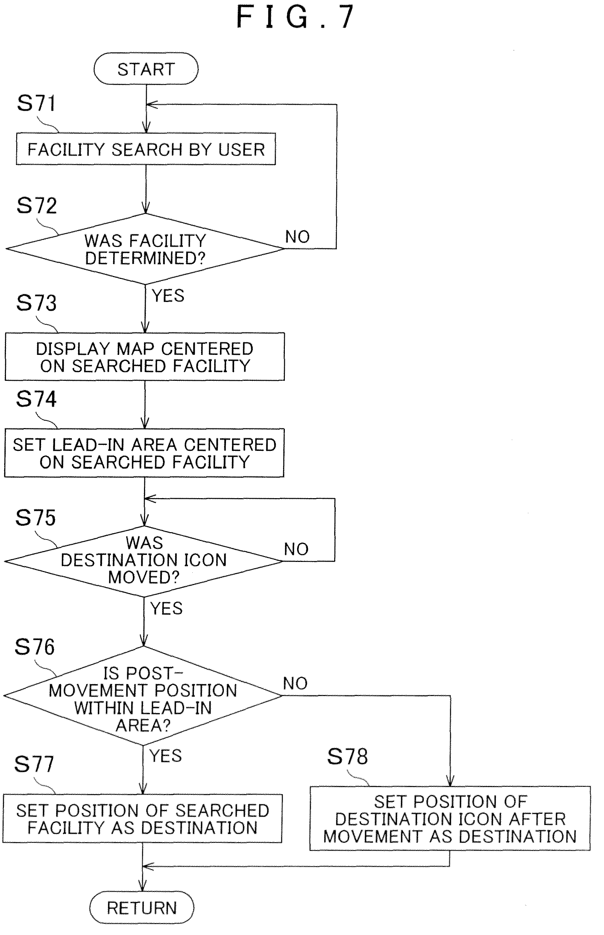

FIG. 7 is a flowchart relating to the navigation device according to the present embodiment. The flowchart is called during execution of a main program of the navigation device. When the user inputs search conditions and performs facility search, the facility search unit 17a performs the search (Step S71) and the search result is displayed on the list as shown in FIG. 2.

When the user determines the facility as the destination from the list (Step S72: YES), the map centered on the determined facility is displayed (Step S73) and the lead-in area centered on the searched facility is set (Step S74). If the user does not select a facility but gives an instruction to go back because the facility desired for the destination is not listed or there are too many facilities to be displayed on the list, the procedure returns to a search menu (Step S72: NO).

When the user selects and moves the destination icon from the function icon column 33 (Step S75: YES), the operation detection unit 17c detects the moved position of the destination icon and the operation control unit 17d judges whether or not the moved position of the destination icon is within the lead-in area (Step S76). If the moved position of the destination icon is within the lead-in area, the operation control unit 17d leads the destination icon in the position of the selected facility and sets the selected facility as the destination (Step S77). If the moved position of the destination icon is outside the lead-in area, the destination is directly set to the moved position (Step S78).

Next, another embodiment of the facility selection screen in FIG. 2 is described.

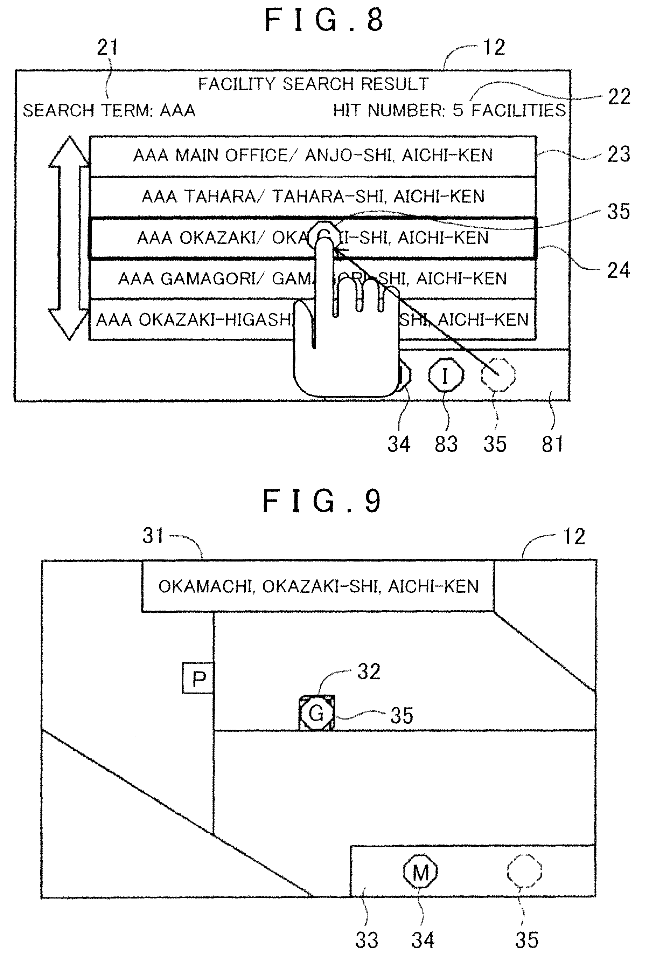

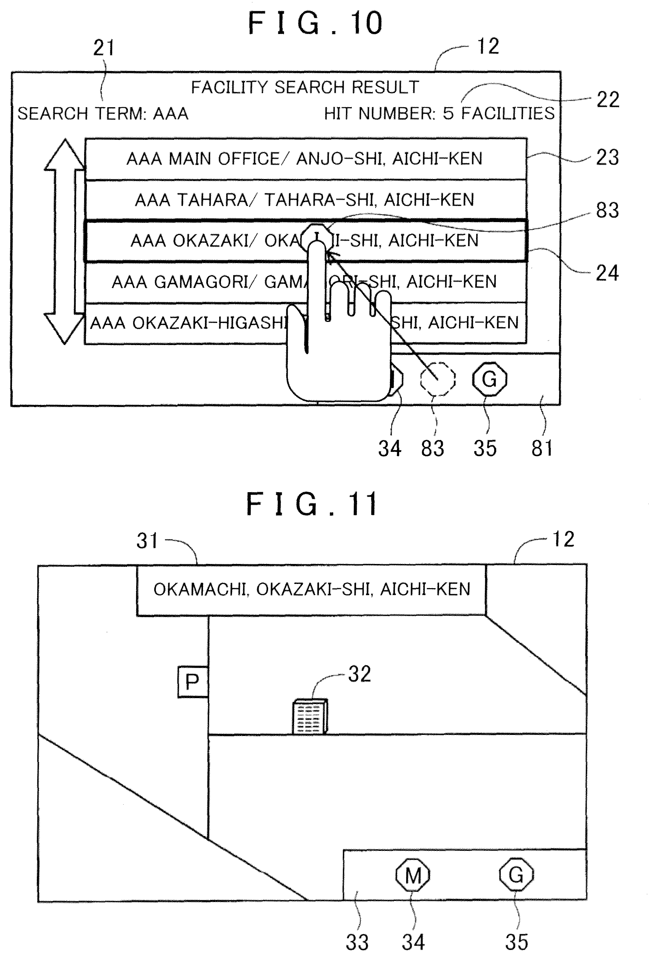

For example, when the user inputs "AAA" as the search term, the facility search processing is executed by the facility search unit 17a and the facility search result is displayed on the display unit 12, as shown in FIGS. 8 and 10. Specifically, the facility list 23 including "AAA" in names is displayed as the facility search result. In addition, the information such as "AAA" that was inputted as the search term, the hit number "5 facilities" as a result of the facility search, and the like is also displayed in the search term display column 21 and the hit number display column 22 respectively.

Here, a function icon column 81 is displayed at the lower-right part of the display unit 12. In the function icon column 81, the memory point icon 34, the destination icon 35, and a map display icon 83 are displayed. The memory point icon 34 includes a function to register as the memory point the position on the map of the searched facility that corresponds to a facility name (the facility information) displayed at the position in the facility list 23 where the memory point icon 34 was moved, and the position registered as the memory point will be easily called in the map or the like.

The destination icon 35 includes a function to set as the destination the position on the map of the facility that corresponds to the facility name (the facility information) displayed at the position in the facility list 23 where the destination icon 35 was moved, and the route to the position set as the destination will be searched by the central processing unit 17.

For example, as shown in FIGS. 8 and 9, if the destination icon 35 is moved onto the "AAA Okazaki/ Okazaki*shi, Aichi-ken" displayed in the search result, displays column 24 in the facility list 23, the searched facility "AAA Okazaki 32" corresponding to the "AAA Okazaki/ Qkazaki-shi, Aichi-ken" is set as the destination. And, the map centered on the searched facility "AAA Okazaki 32" as the destination is displayed on the display unit 12, and also the destination icon 35 is accurately displayed at the position of the "AAA Okazaki 32". Then, a route to the "AAA Okazaki 32" is searched.

In addition, an address of the vicinity of the map displayed on the screen is displayed in the address display column 31, and the memory point icon 34 is displayed in the function icon column 33. That- is, if the destination icon 35 is moved to the desired facility "AAA Okazaki/ Okazaki-shi, Aichi-ken" in the facility list 23, the destination icon 35 is moved to the position of the desired facility "AAA Okazaki 32".

If information of the vicinity of the "AAA Okazaki 32" is required, when moving the map display icon 83 onto the facility list 23, the map centered on the "AAA Okazaki 32" is displayed, as shown in FIG. 3. The map display icon 83 includes a function to display on the display unit 12 the map of the vicinity of the searched facility that corresponds to the facility name (the facility information) displayed at the position in the facility list 23 where the map display icon 83 was moved.

For example, as shown in FIGS. 10 and 11, if the map display icon 83 is moved onto the "AAA Okazaki/ Okazaki-shi, Alchi-ken" displayed in the search result display column 24 in the facility list 23, the map centered on the searched facility "AAA Okazaki 32" that corresponds to the "AAA Okazaki/ Okazaki-shi, Aichl-ken" is displayed on the display unit 12. In addition, an address of the vicinity of the map displayed on the screen is displayed in the address display column 31, and icons such as the memory point icon 34 and the destination icon 35 are displayed in the function icon column 33. That is, the same state as the aforementioned FIG. 3 is given. The subsequent operation are also the same; therefore, the description is omitted.

Thus, by moving the destination icon 35 displayed in the function icon column 81 onto the desired facility name in the facility list 23, the user can easily display on the display unit 12 and confirm the map of the vicinity centered on the searched facility that corresponds to the facility name displayed in the corresponding search result display column 24. At the same time, the destination icon 35 is accurately displayed at the position on the map of the searched facility, and a right route to the searched facility is searched.

In addition, by moving the map display icon 83 displayed in the function icon column 81 onto the desired facility name in the facility list 23, the user can easily display on the display unit 12 and confirm the map of the vicinity centered on the searched facility that corresponds to the facility name displayed in the corresponding search result display column 24. Further, icons such as the memory point icon 34 and the destination icon 35 are displayed on the display unit 12, and destination or the like can be quickly set by operating the destination icon 35 or the like.

While various features have been described in conjunction with the example outlined above, various alternatives, modifications, variations, and/or improvements of those features and/or example may be possible. Accordingly, the example, as set forth above, are intended to be illustrative. Various changes may be made without departing from the broad spirit and scope of the underlying principles.

## Claims

1. A navigation device **characterized by** comprising:
a recording unit (11) that records map information and facility information;
a display unit (12) that displays a map and an icon (35), a function based on a position of the icon after a movement of the icon, or 'post-movement position', being assigned to said icon;
a facility search unit (17a) that searches for a desired facility;
a display control unit (17b) that displays on the display unit a map of a vicinity of a searched facility searched by the facility search unit;
an operation detection unit (17c) that detects a movement, of the icon by a user; and
an operation control unit (17d), that sets a predetermined area from a position of the searched facility as a lead-in area, and which, when the map of the vicinity of the searched facility is displayed on the display unit, if the icon is moved, and if the post-movement position is within the lead-in area, executes the function of the icon based on the position of the searched facility.

2. The navigation device according to claim 1, wherein
the icon is a destination icon to set the post-movement position of the icon as a destination, and the operation control unit sets the position of the searched facility as the destination if the post-movement position of the destination icon is within the lead-in area.

3. The navigation device according to claim 1, wherein:
the display unit has a touch panel unit to perform an input by a touch of a finger: the operation detection unit detects a drag operation by the user based on the input from the touch panel unit; and the operation control unit executes the function of the icon with the position of the searched facility if the icon was subjected, to the drag operation and moved to within the lead-in area.

4. A program causing a computer, which comprises a recording unit that records map information and facility information, and a display unit that displays a map and an icon, to execute the steps of:
searching for a desired facility;
displaying on the display unit a map of a vicinity of a searched facility searched in the facility search step; and
detecting a movement, of the icon by a user;
wherein a predetermined area from a position of the searched facility is set as a lead-in area, and a function based on a position of the icon after a movement of the icon, or 'post-movement position', is assigned to said icon,
said program further causing said computer to further execute the step of
executing, when the map of the vicinity of the searched facility is displayed on the display unit in the display step, if` the icon is moved, and if the post-movement position, detected in the detection step, is within the lead-in area, the function assigned to the icon based on the position of the searched facility.
